# EUROPEAN PATENT APPLICATION

(11) **EP 2 733 832 A1**
(43) Date of publication of application: **21.05.2014**
(21) Application number: 12810833.9
(22) Date of filing: 11.07.2012
(51) Int. Cl.: H02K 21/24, H02K 16/02

(54) **POWER GENERATING DEVICE**

(30) Priority: 14.07.2011 JP 2011155404
(71) Applicant: Shinsei Showji Co., Ltd., Tone-gun, Gunma 379-1204 (JP)
(72) Inventor: MATUSHITA Kiyohiko, Fukuoka-shi Fukuoka 810-0033 (JP); NOGAMI Masakazu, Tone-gun Gunma 379-1204 (JP)
(74) Representative: Ter Meer Steinmeister & Partner
(86) International application number: PCT/JP2012/067672
(87) International publication number: WO 2013/008838

(57) **Abstract**

To provide a power generating device having a low rotational resistance to a power generation amount and having high conversion efficiency. [Solution] The power generating device (50) of the present invention forms magnetic field lines in a lateral direction between a first rotating plate (20a) and a second rotating plate (20b) and moves the magnetic field lines with respect to coils (26) oriented in the lateral direction, so that it is possible to reduce the difference between sparse and dense magnetic field lines in comparison with conventional power generating devices. Therefore, although the variation of the magnetic field in the coils (26), which is caused by the rotation, is small, the rotational resistance is reduced and the force required for the rotation can be reduced by an amount of the reduced resistance. This can increase the conversion efficiency.

## Description

### [Technical Field]

The present invention relates to a power generating device having high conversion efficiency.

### [Background Art]

In a conventional brushless power generating device using a permanent magnet, as shown in the invention disclosed in, for example, Patent Document 1, a pole of the permanent magnet and a winding core of a coil are generally arranged opposite to each other.

### [Prior Art]

### [Patent Document]

[Patent Document 1] Japanese Published Unexamined Patent Application No. 2009-195051

### [Summary of the Invention]

### [Problem(s) to be Solved by the Invention]

However, in a conventional power generating device in which a pole of a permanent magnet and a winding core of a coil face each other as disclosed in Patent Document 1, the rotational resistance becomes large at starting or generating power due to strong magnetic force applied to the coil, and there is a limitation on conversion efficiency obtained.

In view of the above problem, the present invention has been made and aims to provide a power generating device having a small rotational resistance and high conversion efficiency with respect to a power generation amount.

### [Means for Solving the Problem]

In order to solve the above problem, the present invention provides a power generating device 50 including: a first rotating plate 20a and a second rotating plate 20b provided at a predetermined interval and rotating together; a rotating part 20 having the first rotating plate 20a and the second rotating plate 20b; magnet pairs 22 in which two permanent magnets 22a and 22b of each pair are respectively provided on the first rotating plate 20a and the second rotating plate 20b with the same poles of the magnets facing each other; a magnetic part 23 constituted by the magnet pairs 22 concentrically provided, the adjacent poles are different from each other in polarity; a rotating unit 24 for rotating the rotating part 20; and a plurality of coils 26 which are provided between the poles facing each other of the magnetic part 23 with winding cores of the coils arranged approximately along a rotation direction of the rotating part 20, and generate power by rotation of the rotating part 20, wherein the coils 26 are wound in the same direction, and a magnetic core 14 is provided at each winding core of the coils 26.

(2) In order to solve the above problem, the present invention provides the power generating device 50 according to the above item (1), wherein the number of the magnet pairs 22 is larger than that of the coils 26, further, an end surface of the magnetic core 14 in a direction opposite from the rotation direction of the rotating part 20 projects from a winding end surface of the coil 26 by a predetermined amount.

### [Effect of the Invention]

The present invention can provide a power generating device having a small rotational resistance and high conversion efficiency with respect to a power generation amount.

### [Brief Description of the Drawings]

Fig. 1 is a schematic view of a power generating device according to the present invention.
Fig. 2 is a view explaining an example of a magnetic core suitable for the power generating device according to the present invention.
Fig. 3 is a view explaining operation of the power generating device according to the present invention.
Fig. 4 is a view explaining an example of arrangement of magnet pairs and coils suitable for the power generating device according to the present invention.
Fig. 5 is a view explaining an example of suitable wiring of the power generating device according to the present invention.
Fig. 6 is a view explaining an example that the power generating devices according to the present invention are stacked at multiple stages.

### [Mode for Carrying Out the Invention]

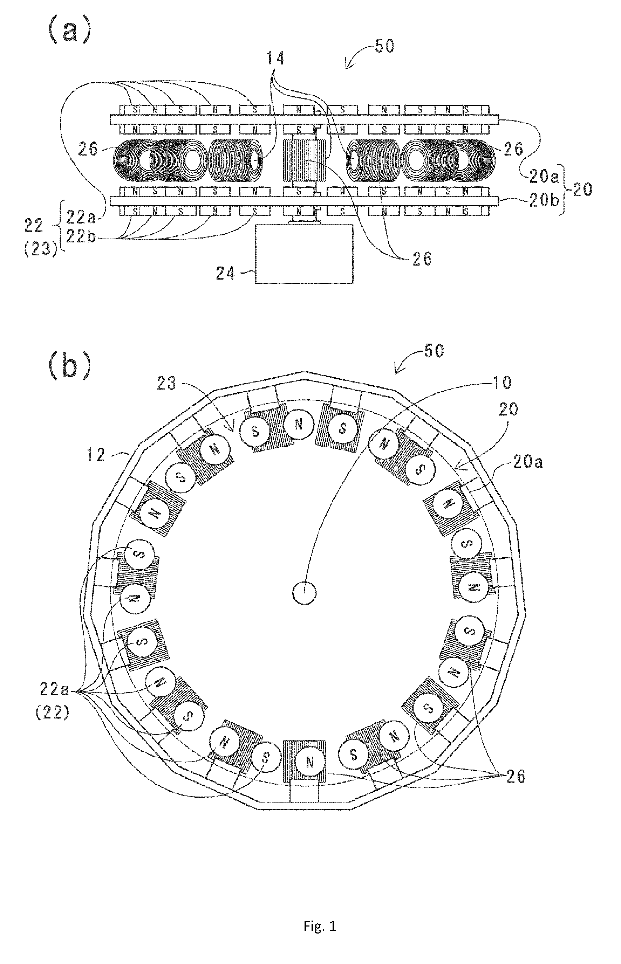

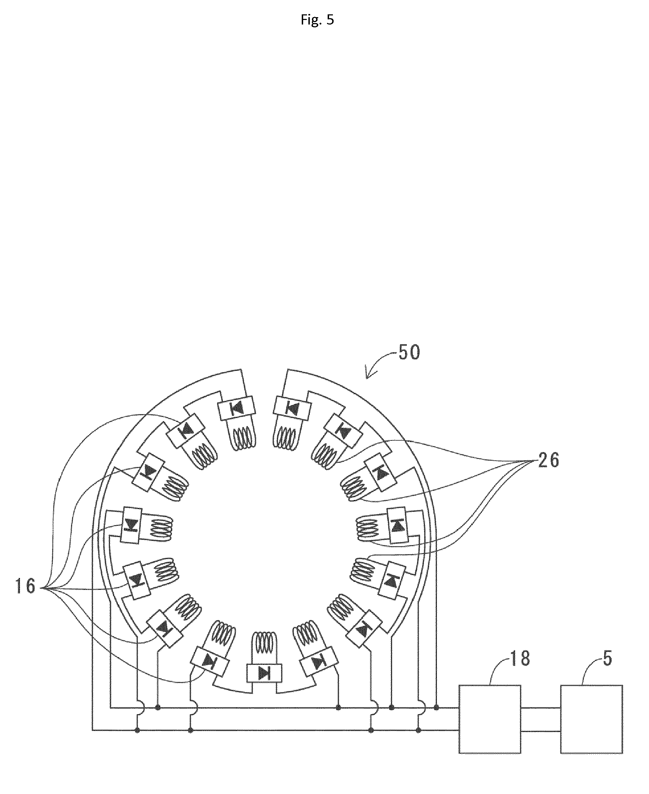

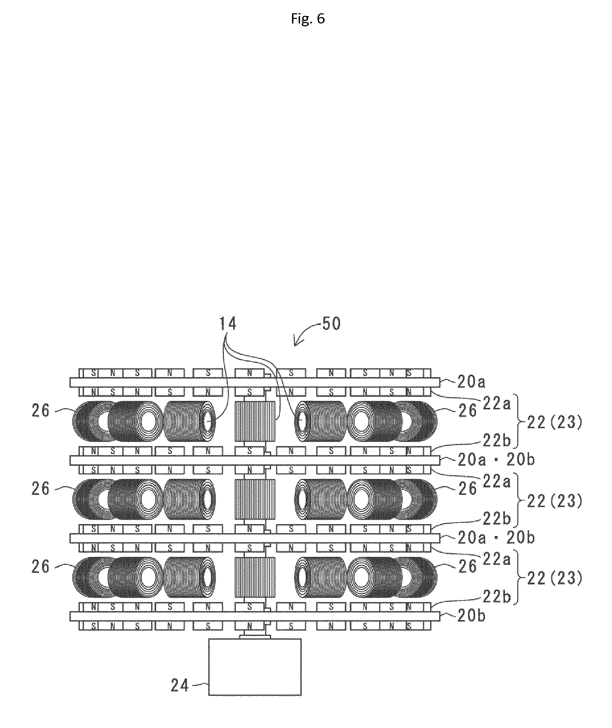

A power generating device according to the present invention will be described with reference to the drawings. Fig. 1(a) is a side view of a power generating device 50 according to the present invention. Fig. 1 (b) is a top view of the power generating device 50 according to the present invention. Note that a coil holding part 12 is omitted in Fig. 1(a) and Fig. 6 described below. In Fig. 1(b), only an outline of a first rotating plate 20a is indicated by a broken line. In addition, electric wirings are omitted in the figures other than Fig. 5.

The power generating device 50 according to the present invention has: a first rotating plate 20a and a second rotating plate 20b provided at a predetermined interval and rotating together; a rotating part 20 mainly constituted by the first rotating plate 20a and the second rotating plate 20b; magnet pairs 22 constituted by two permanent magnets 22a and 22b; a magnetic part 23 constituted by the magnet pairs 22 concentrically provided; a rotating unit 24 for rotating the rotating part 20; andapluralityof coils 26 which are positioned between the poles of the magnetic part 23 facing each other by being held by a coil holding part 12 and have winding cores approximately along a rotation direction of the rotating part 20. Moreover, in the power generating device 50 according to the present invention, the rotating part 20 side having the magnetic part 23 serves as a rotor, and the coil holding part 12 side holding the coils 26 serves as a stator (armature).

The magnetic part 23 which constitutes the power generating device 50 is constituted by the plurality of magnet pairs 22. The magnet pair 22 is constituted by the two permanent magnets 22a and 22b. One of the pair of permanent magnets 22a and 22b is provided on the first rotating plate 20a, while the other is provided on the second rotating plate 20b. Therefore, a gap is formed between the permanent magnets 22a and 22b in accordance with an interval between the first rotating plate 20a and the second rotating plate 20b. The permanent magnets 22a and 22b are provided so that the same poles thereof face each other. The coil 26 is provided between the poles of the permanent magnets 22a and 22b facing each other.

The permanent magnets 22a are provided in a manner so as to be approximately concentric with a rotating shaft 10 of the rotating part 20 (first rotating plate 20a). Also, the permanent magnets 22b are provided in a manner so as to be approximately concentric with the rotating shaft 10 of the rotating part 20 (second rotating plate 20b). Thus, the magnet pairs 22 are arranged in a manner so as to be approximately concentric with the rotating shaft 10 of the rotating part 20. Therefore, the magnetic part 23 is formed in a substantial ring shape around the rotating shaft 10. The magnet pairs 22 are provided in a state where the adjacent poles of the adjacent magnets 22a (22b) differ fromeach other inpolarity. Therefore, inside the magnet pairs 22, N-poles and S-poles of the magnet pairs 22 are alternately positioned, that is, positioned in the form of (N:N)-(S:S)-(N:N)-(S:S) ···. The first rotating plate 20a and the second rotating plate 20b are fixed to the rotating shaft 10 and they rotate integrally. Accordingly, rotation does not cause changes in positional relationship among them.

For the permanent magnets 22a and 22b, well-known permanent magnets having approximately the same magnetic force are used. Preferably, a permanent magnet having strong magnetic force, therefore, a well-known rare-earth magnet or the like, is used as the permanent magnets 22a and 22b.

The coils 26 are provided between the magnetic part 23 formed in a manner so as to be approximately concentric. The coils 26 are provided in a manner so as to be approximately concentric, accordingly. The coil holding part 12 holding the coils 26 is fixed to an outer casing or the like (not shown), and the coils 26 do not rotate even if the rotating part 20 rotates. The coils 26 are provided in a state where the direction of the winding cores of the coils 26 are arranged approximately along the rotation direction of the rotating part 20, that is, approximately along a tangential direction or approximately along circumferential direction of the rotating part 20. Although a wire material having a circular cross section may be used as the coil 26, it is preferable to use a wire material having a rectangular cross section in terms of an improvement in winding density and an improvement in surface current by skin effect.

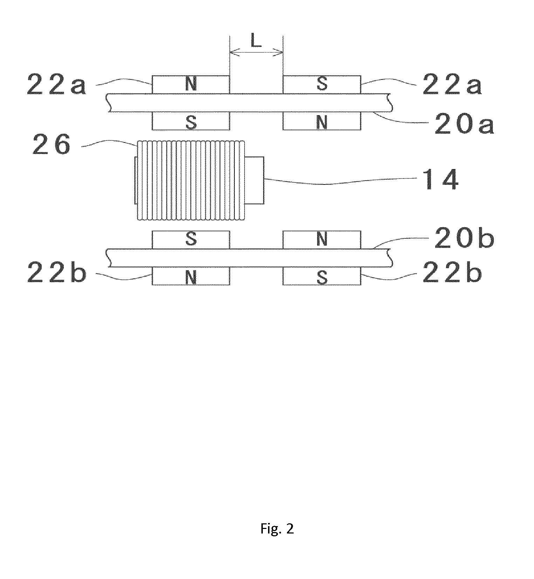

A magnetic core 14 is inserted in the coil 26 in terms of an improvement in magnetic permeability. A well-known magnetic material such as ferrite core or metal is usable for the magnetic core 14. Particularly, it is preferable to use silicon steel having high magnetic permeability. In addition, the magnetic core 14 maybe constituted by bundling up a plurality of magnetic materials such as iron each covered with a non-magnetic body made of synthetic resin or the like. As shown in Fig. 2, preferably, an end surface, which is positioned in a direction opposite from the rotation direction of the rotating part 20 (on the side of the direction to which the magnet pair 22 approaches), of the magnetic core 14 is projected from a winding end surface of the coil 26 by a predetermined amount. Preferably, the projection amount ranges from the value of a distance L between the adjacent magnet pairs 22 to about one third of the value of the distance L.

For the rotating unit 24 for rotating the rotating part 20,a well-known waterwheel, a windmill, an internal-combustion such as an engine, a turbine, a motor, a rotating part such as a wheel of a bicycle or an automobile, a mechanism rotated manually, etc., with use of a pedal, a handle or the like, can be used.

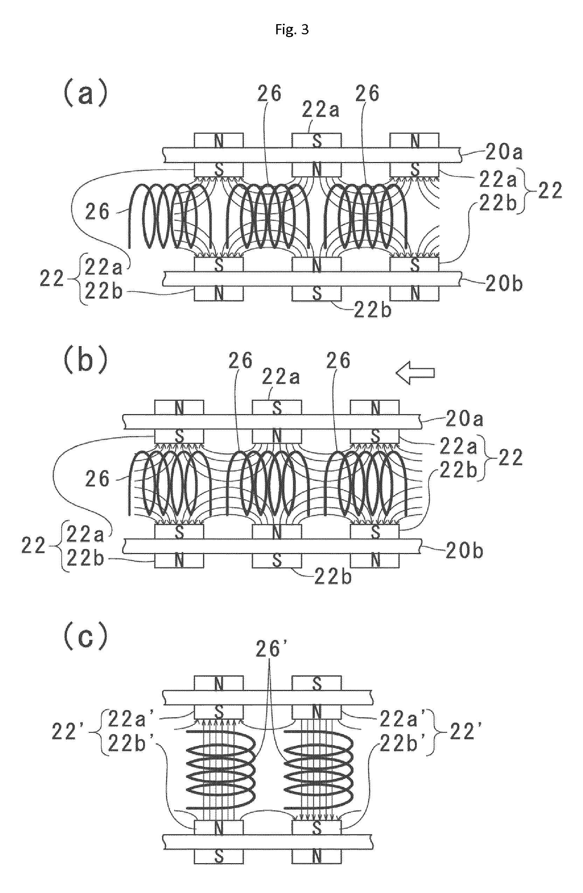

Next, power generation operation of the power generating device 50 according to the present invention will be described. First, the same poles of the permanent magnets 22a and 22b are made to face each other. Therefore, as shown in Fig. 3(a), magnetic lines extending from the N-poles are curved by repulsion, approximately horizontally advance between the first rotating plate 20a and the second rotating plate 20b and reach the S-poles of the adj acent permanent magnets 22a and 22b. Since the magnet pairs 22 are concentrically arranged on the rotating part 20, most of the magnetic lines between the magnet pairs 22 are concentratedbetween the poles of the magnetic part 23 and formed in a substantial ring shape similar to the magnetic part 23. Since the coils 26 are provided between the magnetic part 23, many of the magnetic lines of the magnet pair 22 pass through the magnetic core 14 of the coil 26.

Then, when the rotating unit 24 rotates, the rotating part 20 rotates and thus the first rotating plate 20a and the second rotating plate 20b rotate together. When the first rotating plate 20a and the second rotating plate 20b rotate, the permanent magnets 22a and 22b move as shown in Fig. 3(b). Thus, a magnetic field in the coil 26 changes to generate electromagnetic induction, and the coil 26 generates power. By continuously rotating the rotating part 20, the magnet pairs 22 move successively, the magnetic field in the coil 26 continuously changes and the coil 26 continuously generates alternating current.

As shown in Fig. 3(c), in a conventional constitution that a pole of a permanent magnet and a winding core of a coil face each other, poles of permanent magnets 22a' and 22b' facing each other differ from each other in polarity. In this case, magnetic lines in the magnet pairs 22' concentrate in a region between the permanent magnets 22a' and 22b' facing each other, and greatly differ from those in the other region in density. When the coil 26' passes through the dense region of magnetic lines, the maximum amount of power is generated and the rotational resistance is also maximized. To the contrary, when the coil 26' passes through the non-dense region of magnetic lines, almost no power is generated and the rotational resistance is also small. On the other hand, since the power generating device 50 of the present invention horizontally forms magnetic lines between the first rotating plate 20a and the second rotating plate 20b and moves the plates with respect to the horizontally directed coils 26, a density difference of the magnetic lines can be made smaller than that of a conventional power generating device. Therefore, although change in a magnetic field in the coil 26 by rotation is small, the rotational resistance is made small and thus force required for rotation can be made small. Comparing conversion efficiency of the power generating device 50 with that of the conventional power generating device, it was found that the former is higher than the later.

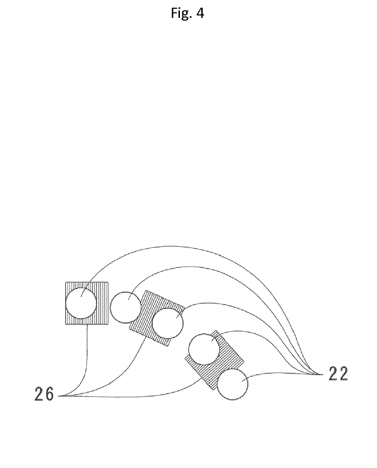

As shown in Fig. 4, in the power generating device 50, preferably, the adjacent three coils 26 are positioned between the magnets of the four or five adjacent magnet pairs 22 in a state where the rotatingpart 20 does not rotate (stands still) . "Positioned" here indicates that both ends of the adj acent three coils 26 overlap with the four or five magnet pairs 22 even slightly. According to this constitution, positions of the magnet pairs 22 shift with respect to each of the coils 26, and consequently, a difference occurs between the coils 26 in power generation amount. Thus, the power generation amount can be averaged over the entire power generating device 50, and the conversion efficiency can further be improved.

Fig. 5 shows an example of electrical wiring of the power generating device 50. Note that the wiring example is only one suitable example regarding the power generating device 50 and electrical wiring is not limited thereto. First, each coil 26 is connected to a rectifying part 16 so that output from the coil 26 is converted to direct current. Preferably, a full-wave rectifier is used as the rectifying part 16 in terms of conversion efficiency. The three coils 26 are connected in series as one unit via the rectifying parts 16. Outputs from the respective units (5 units shown in Fig. 5) are connected in parallel to each other and connected to an input of an inverter 18. The inverter 18 converts output from the power generating device 50 to required power output, for example, 3-phase AC, and outputs it to a load 5. According to this constitution, since the inverter 18 converts output from the power generating device 50 to required power output, even if, for example, with a configuration which cannot output 3-phase AC as shown in Fig. 4, the power generating device 50 can correspond to an electric device requiring 3-phase AC. Note that, charging a secondary battery and supplying power to the load 5 such as an LED light or a bulb not requiring 3-phase AC may be directly performed without using the inverter 18.

As shown in Fig. 6, in the power generating device 50 according to the present invention, the rotating parts 20, the magnetic parts 23 and the coils 26, etc., may be stacked at multiple stages so as to output large power.

As described above, according to the power generating device 50 according to the present invention, power can be generated at high conversion efficiency. In addition, power can be generated even by small force due to the small rotational resistance. Further, the power generating device 50 according to the present invention can be applied to almost all power generating devices such as, from a large power plant to a small generator of a bicycle, a manually operated flashlight or the like. Note that, the constitution, shape or operation of each part, the number of coils or magnet pairs, or the like of the power generating device 50 according to the present invention is not particularly limited to the example described above, and the present invention can be modified and carried out within the scope without departing the gist of the present invention.

### [Description of the Symbols]

20: rotating part
20a: first rotating plate
20b: second rotating plate
22a, 22b: permanent magnet
22: magnet pair
23: magnetic part
24: rotating unit
26: coil
50: power generating device

## Claims

1. A power generating device comprising:
a first rotating plate and a second rotating plate provided at a predetermined interval and rotating together;
a rotating part having the first rotating plate and the second rotating plate;
magnet pairs in which two permanent magnets of each pair are respectively provided on the first rotating plate and the second rotating plate with the same poles of the magnets facing each other;
a magnetic part constituted by the plurality of magnet pairs concentricallyprovided, the adj acent poles are different from each other in polarity;
a rotating unit for rotating the rotating part; and
a plurality of coils which are provided between the poles of the magnetic part facing each other with winding cores of the coils arranged approximately along a rotation direction of the rotating part, and generate power by rotation of the rotating part,
wherein the coils are wound in the same direction, and a magnetic core is provided at each winding core of the coils.

2. The power generating device according to claim 1, wherein the number of the magnet pairs is larger than that of the coils, and an end surface of the magnetic core in a direction opposite from the rotation direction of the rotating part projects from a winding end surface of the coil by a predetermined amount.
